# EUROPEAN PATENT APPLICATION

(11) **EP 4 546 075 A1**
(43) Date of publication of application: **30.04.2025**
(21) Application number: 24810062.0
(22) Date of filing: 09.04.2024
(51) Int. Cl.: G05D 1/43

(54) **ROBOT MULTI-TASK OPERATION PLANNING METHOD AND SYSTEM AND USE THEREOF**

(30) Priority: 22.05.2023 CN 202310572120
(71) Applicant: Huizhi Robot Technology (Shenzhen) Co., Ltd., Shenzhen, Guangdong 518067 (CN)
(72) Inventor: WANG, Yuanbin, Shenzhen, Guangdong 518067 (CN); XU, Shaoqiang, Shenzhen, Guangdong 518067 (CN); CHEN, Zhaoxian, Shenzhen, Guangdong 518067 (CN)
(74) Representative: Huang, Liwei
(86) International application number: PCT/CN2024/086802
(87) International publication number: WO 2024/239814

(57) **Abstract**

The application provides a robot multi-task operation planning method and system, and an application of the robot multi-task operation planning method. The method includes: determining a first robot and a to-be-operated surface; selecting and combining a task set capable of simulating a boundary of an automatic operation area; selecting one or more task sets as a preliminary task set, and configuring a trajectory task for each task; executing a corresponding trajectory task while executing the preliminary task set, and finally fitting one or more complete and closed boundary lines based on a collected work trajectory; and enabling the robot to perform trajectory planning and automatic operation in the boundary lines. The application creates relevant area information to complete the deployment of the robot, and requires no professional and cumbersome deployment processes such as map construction, editing and path setting.

## Description

### TECHNICAL FIELD

The application relates to the field of robot multi-task operation planning, and in particular, to a robot multi-task operation planning method and system, and an application of the robot multi-task operation planning method.

### BACKGROUND

A robot is a machine device that executes work automatically, and can be directed by humans or follow pre-programmed programs. In modem industry, a robot refers to an artificial machine device that can execute tasks automatically to replace or assist human work. This machine device is generally an electromechanical device controlled by a computer program or electronic circuit. The robot performs a job that can replace or assist humans, such as in manufacturing, construction, or hazardous jobs. With the development of mobile robot technology, more and more robots are applied to various industries and scenarios.

An automatic operation of a robot generally requires a clear operating area for path planning. Constructing and editing maps in advance and planning operation areas and operation plans are called deployment. The deployment process is crucial to the automatic operation of the robot. Without a map as a guide, it is difficult for the robot to complete the automatic operation in a designated area. However, the deployment process is often complicated and requires map construction and path setting. Especially in some large areas, such as large shopping malls and large farmlands, the operation area is wide and the terrain is relatively complex. If it is desired to implement automatic operation of the robot (such as automatic cleaning and automatic harvesting), high cost is required for map construction and obstacle marking, and the requirements on deployment personnel and operators are high. Therefore, in large operation areas, the preliminary preparation work for the robot is extremely cumbersome, which strictly limits application of the robot.

In the conventional technology, there is a solution to implement the deployment process by using a teaching and reproduction method for the robot. This solution requires an operator to perform a complete path demonstration, allowing the robot to learn an operation path of the operator and repeat the same path, thereby simplifying the deployment process. However, in a large operation area, it is extremely time-consuming for the operator to fully achieve a work path of the entire area, which has a certain requirement on operation technology of the operator.

### SUMMARY

In view of this, the application provides a robot multi-task operation planning method and system, and an application of the robot multi-task operation planning method. The specific solutions are as follows:
According to a first aspect, the application provides a robot multi-task operation planning method. The planning method includes:
determining a preset first robot and a preset to-be-operated surface, and defining an area that is in the to-be-operated surface and that requires the first robot to automatically complete a preset first operation type as an automatic operation area;
selecting a task needing to be executed on the to-be-operated surface and relating to a boundary of the automatic operation area, and combining all task sets capable of simulating the boundary of the automatic operation area according to moving ranges of tasks if executed;
comprehensively analysing execution situations and operation types of tasks in the task sets and simulation status of the boundary of the automatic operation area, selecting one or more task sets as a preliminary task set, and configuring a trajectory task about a work trajectory during execution of a collection task for each task in the preliminary task set;
executing the corresponding trajectory task while executing the preliminary task set, projecting a collected work trajectory onto the to-be-operated surface to obtain a work path, and fitting one or more complete and closed boundary lines based on the work path, wherein an area surrounded by the boundary lines is a simulated automatic operation area; and
enabling the first robot to perform path planning in the simulated automatic operation area, and automatically completing an operation of the first operation type in the automatic operation area.

In a specific embodiment, the planning method includes: defining a task related to the first operation type as a first task;
judging whether the first task exists in the preliminary task set;
if the first task does not exist, arranging the operation of the first operation type for an area except the automatic operation area in the to-be-operated surface; and
if the first task exists, constructing a first operation area where an operation has been completed based on a work trajectory of the first task, and arranging the operation of the first operation type for an area except the automatic operation area and the first operation area in the to-be-operated surface.

In a specific embodiment, the planning method includes: after completing an automatic operation, detecting an operation effect of the automatic operation area; and
if an area with a poor operation effect exists, constructing a task of the first operation type in the area.

In a specific embodiment, the planning method includes: if a device related to a task needs to move on the to-be-operated surface,
configuring a preset trajectory tracking apparatus on the device to collect a work trajectory, and taking a trajectory of the device as a work trajectory of the task.

In a specific embodiment, the planning method includes: if a device related to a task does not move on the to-be-operated surface and the device relies on a user to move on the to-be-operated surface,
configuring a preset trajectory tracking apparatus on the user to collect a work trajectory, and taking a moving trajectory of the user as a work trajectory of the task.

According to a second aspect, the application provides a robot multi-task operation planning system. The robot multi-task operation planning system includes:
a preliminary preparation unit, configured to determine a preset first robot and a preset to-be-operated surface, and define an area that is in the to-be-operated surface and that requires the first robot to automatically complete a preset first operation type as an automatic operation area;
a task selection unit, configured to select a task needing to be executed on the to-be-operated surface and relating to a boundary of the automatic operation area, and combine all task sets capable of simulating the boundary of the automatic operation area according to moving ranges of tasks if executed;
a task allocation unit, configured to comprehensively analyse execution situations and operation types of tasks in the task sets and simulation status of the boundary of the automatic operation area, select one or more task sets as a preliminary task set, and configure a trajectory task about a work trajectory during execution of a collection task for each task in the preliminary task set;
a task execution unit, configured to execute the corresponding trajectory task while executing the preliminary task set, project a collected work trajectory onto the to-be-operated surface to obtain a work path, and fit one or more complete and closed boundary lines based on the work path, wherein an area surrounded by the boundary lines is a simulated automatic operation area; and
an automatic operation unit, configured to enable the first robot to perform path planning in the simulated automatic operation area, and automatically complete an operation of the first operation type in the automatic operation area.

In a specific embodiment, the robot multi-task operation planning system further includes:
a non-automatic operation unit, configured to define a task related to the first operation type as a first task; judge whether the first task exists in the preliminary task set; if the first task does not exist, arrange the operation of the first operation type for an area except the automatic operation area in the to-be-operated surface; and
if the first task exists, construct a first operation area where an operation has been completed based on a work trajectory of the first task, and arrange the operation of the first operation type for an area except the automatic operation area and the first operation area in the to-be-operated surface.

The robot multi-task operation planning system further includes:
an operation detection unit, configured to, after completing an automatic operation, detect an operation effect of the automatic operation area; and if an area with a poor operation effect exists, construct a task of the first operation type in the area.

According to a third aspect, the application provides a cleaning method adopting the robot multi-task operation planning method according to any one of the first aspect. The cleaning method includes:
determining a preset cleaning robot and a preset to-be-cleaned surface, and defining an area that is in the to-be-cleaned surface and that requires the cleaning robot to automatically complete a preset first cleaning type as an automatic cleaning area;
selecting a task needing to be executed on the to-be-cleaned surface and relating to a boundary of the automatic cleaning area, and combining all task sets capable of simulating the boundary of the automatic cleaning area according to moving ranges of tasks if executed;
comprehensively analysing execution situations and operation types of tasks in the task sets and simulation status of the boundary of the automatic cleaning area, selecting one or more task sets as a preliminary task set, and configuring a trajectory task about a work trajectory during execution of a collection task for each task in the preliminary task set;
executing the corresponding trajectory task while executing the preliminary task set, projecting a collected work trajectory onto the to-be-cleaned surface to obtain a work path, and fitting one or more complete and closed boundary lines based on the work path, wherein an area surrounded by the boundary lines is a simulated automatic cleaning area; and
enabling the cleaning robot to perform path planning in the simulated automatic cleaning area, and automatically completing an operation of the first cleaning type in the automatic cleaning area.

In a specific embodiment, a cleaning device related to the task includes a floor scrubber and/or a floor sweeper.

According to a fourth aspect, the application provides an aerial operation method adopting the robot multi-task operation planning method according to any one of the first aspect. The aerial operation method includes:
determining a preset flying robot and a preset to-be-operated surface, and defining an area that is in the to-be-operated surface and that requires the flying robot to automatically complete a preset first operation type as an automatic flying area;
selecting a task needing to be executed on the to-be-operated surface and relating to a boundary of the automatic flying area, and combining all task sets capable of simulating the boundary of the automatic flying area according to moving ranges of tasks if executed;
comprehensively analysing execution situations and operation types of tasks in the task sets and simulation status of the boundary of the automatic flying area, selecting one or more task sets as a preliminary task set, and configuring a trajectory task related to a flying trajectory during execution of a collection task for each task in the preliminary task set;
executing the corresponding trajectory task while executing the preliminary task set, projecting a collected flying trajectory onto the to-be-operated surface to obtain a flying path, and fitting one or more complete and closed boundary lines based on the flying path, wherein an area surrounded by the boundary lines is a simulated automatic flying area; and
enabling the flying robot to perform path planning in the simulated automatic flying area, and automatically completing an operation of the first operation type in the automatic flying area.

**Beneficial effects**: the application provides a robot multi-task operation planning method and system, and an application of the robot multi-task operation planning method, which fully utilize the coordination relationship among tasks in work areas to create relevant area information by utilizing the work trajectories of other tasks before the robot automatically operates, so as to complete the deployment of the robot. Compared with the prior art, the application requires neither professional and cumbersome deployment processes such as map construction, editing and path setting nor complicated operation processes such as task selection, position confirmation and task initiation, and can give full play to the advantages of non-automatic operations and automatic operations.

### BRIEF DESCRIPTION OF DRAWINGS

FIG. 1 is a flowchart of a robot multi-task operation planning method according to an embodiment of the application;
FIG. 2 is a schematic diagram of a boundary of an automatic operation area according to an embodiment of the application;
FIG. 3 is a schematic diagram of modules of a robot multi-task operation planning system according to an embodiment of the application;
FIG. 4 is a flowchart of a cleaning method according to an embodiment of the application; and

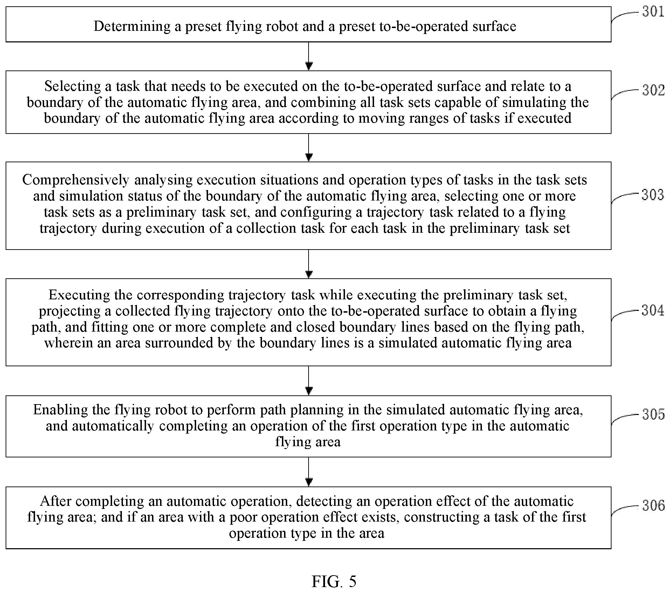

FIG. 5 is a flowchart of an aerial operation method according to an embodiment of the application.

Reference numerals: 1: preliminary preparation unit; 2: task selection unit; 3: task allocation unit; 4: task execution unit; and 5: automatic operation unit.

### DETAILED DESCRIPTION OF EMBODIMENTS

Hereinafter, various embodiments disclosed by the application will be described more fully. The disclosure of the application may have various embodiments, and adjustments and changes may be made therein. However, it should be understood that there is no intention to limit the various embodiments disclosed by the application to the specific embodiments disclosed herein, but rather the disclosure of the application is to be understood to cover all modifications, equivalents, and/or alternatives falling within the spirit and scope of the various embodiments disclosed by the application.

### Embodiment 1

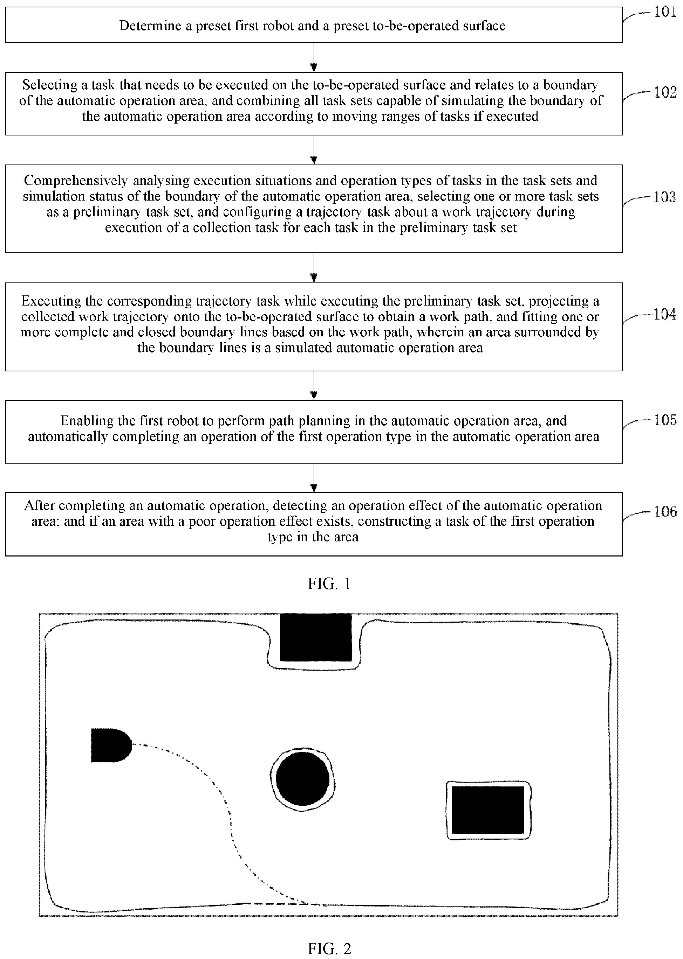

Embodiment 1 of the application discloses a robot multi-task operation planning method, which fully utilizes the coordination relationship among tasks in work areas to create relevant area information by utilizing the work trajectories of other tasks before the robot automatically operates, and can give full play to the advantages of manual operations and automatic operations. The specific process is shown in FIG. 1 of the specification. The specific solution is as follows:
A robot multi-task operation planning method includes:
101. determining a preset first robot and a preset to-be-operated surface, and defining an area that is in the to-be-operated surface and that requires the first robot to automatically complete a preset first operation type as an automatic operation area;
102. selecting a task needing to be executed on the to-be-operated surface and relating to a boundary of the automatic operation area, and combining all task sets capable of simulating the boundary of the automatic operation area according to moving ranges of tasks if executed;
103. comprehensively analysing execution situations and operation types of tasks in the task sets and simulation status of the boundary of the automatic operation area, selecting one or more task sets as a preliminary task set, and configuring a trajectory task about a work trajectory during execution of a collection task for each task in the preliminary task set;
104. executing the corresponding trajectory task while executing the preliminary task set, projecting a collected work trajectory onto the to-be-operated surface to obtain a work path, and fitting one or more complete and closed boundary lines based on the work path, wherein an area surrounded by the boundary lines is a simulated automatic operation area; and
105. enabling the first robot to perform path planning in the simulated automatic operation area, and automatically completing an operation of the first operation type in the automatic operation area; and
106. after completing an automatic operation, detecting an operation effect of the automatic operation area; and if an area with a poor operation effect exists, constructing a task of the first operation type in the area.

According to the robot multi-task operation planning method of this embodiment, the multi-task may refer to a single manual and automatic combination and a plurality of manual and automatic combinations. The robot multi-task operation planning method is suitable for scenarios with large work areas and inconvenience in map construction. In these work areas, there are often diverse tasks, and an automatic operation of the robot is only one of the tasks. For example, in a large shopping mall, the robot multi-task operation planning method of this embodiment can be applied to cleaning work. The robot can perform floor cleaning work. Before the automatic operation, a to-be-cleaned area is set by recording a trajectory of work such as wiping walls and escalators.

101. Determining a preset first robot and a preset to-be-operated surface, and defining an area that is in the to-be-operated surface and that requires the first robot to automatically complete a preset first operation type as an automatic operation area. The automatic operation area is a to-be-solved area, and after a boundary of the automatic operation area is solved, the robot can automatically perform path planning. The to-be-operated surface has the characteristics of a large area, inconvenience in map construction and different operation requirements thereon, and the first robot is responsible for executing an automatic operation task. The first operation type is an operation executed by the first robot. For example, the first robot is a sweeping robot, and the first operation type is sweeping. The to-be-operated surface and the first robot may be set based on a specific application scenario. For example, the to-be-operated surface is an entire to-be-harvested farmland, the first robot is an automatic harvester, and the first operation type is to harvest a specific crop. The manual operation is not required, according to the robot multi-task operation planning method, cleaning weeds at an edge of the farmland can be performed before automatic harvesting, so that a boundary of the automatic harvesting is set.

102. Selecting a task needing to be executed on the to-be-operated surface and relating to a boundary of the automatic operation area, and combining all task sets capable of simulating the boundary of the automatic operation area according to moving ranges of tasks if executed. A plurality of tasks are related to the to-be-operated surface and are necessarily executed, and an execution sequence of the tasks is not excessively required, so that a plurality of task sets may be flexibly set. The solution of this embodiment needs to record the relevant work trajectory while executing some tasks, and further deduces the boundary of the automatic operation area of the first robot. For example, when a shopping mall floor is wiped, the tasks include wiping walls, cleaning trash cans, and inspecting devices.

Diverse tasks mean that a plurality of task sets may be combined. A task set may be understood as a solution that can achieve a specific effect. Each task set represents a solution. The effects of the solutions vary, and the execution situations also vary. In this embodiment, each task set may simulate the boundary of the automatic operation area, but there is a difference between the simulation situation and the task execution situation, and a better solution needs to be selected from the simulation situation and the task execution situation to be executed.

Among the tasks, a task that is executed on the to-be-operated surface and that relates to the boundary of the automatic operation area is selected. The solution of this embodiment needs to sort out the boundary of the automatic operation area from work trajectories related to these tasks, and therefore needs to select a task related to the boundary of the automatic operation area. The selection rule may be preset. The boundary of the automatic operation area has a rough area, and tasks can be manually selected or a range of an area can be set in advance to incorporate the tasks related to the area. The first robot needs an accurate boundary, a previous boundary range is fuzzy, and only a simulated boundary is the accurate boundary.

It should be noted that the boundary of the automatic operation area is not limited to one closed curve at an outer edge, and the boundary may be a plurality of closed curves. As shown in a scenario of FIG. 2, the automatic operation area has three closed boundary lines including two boundary lines positioned at an inner edge and one boundary line positioned at an outer edge. In actual applications, there are often some areas in the work area that do not require automatic operation, such as areas for storing devices. Therefore, the automatic operation area includes not only a boundary line of the outer edge but also a boundary line of the inner edge.

Further, a task related to the first operation type is defined as a first task, and a plurality of task types may exist in some tasks, for example, cleaning the floor includes sweeping, mopping, disinfecting and the like. According to the solution of this embodiment, a part related to the first operation type needs to be selected, trajectory monitoring is performed on the content related to the first operation type part in the first task, so that repeated work is avoided, and work efficiency is reduced. Therefore, it is necessary to determine whether a first task exists in the preliminary task set; if the first task does not exist, the operation of the first operation type is arranged for an area except the automatic operation area in the to-be-operated surface; and if the first task exists, a first operation area where an operation has been completed is constructed based on a work trajectory of the first task, and the operation of the first operation type is arranged for an area except the automatic operation area and the first operation area in the to-be-operated surface. The to-be-operated surface has other areas besides the automatic operation area, and the first robot needs to set a certain safety distance when automatically operating, so that a task needs to be set for the areas except the automatic operation area to fully complete the work of the to-be-operated surface.

103. Comprehensively analysing execution situations and operation types of tasks in the task sets and simulation status of the boundary of the automatic operation area, selecting one or more task sets as a preliminary task set, and configuring a trajectory task about a work trajectory during execution of a collection task for each task in the preliminary task set.

The preliminary task set is selected and may be composed of one or more task sets. Each task set may simulate the boundary of the automatic operation area, and the preliminary task set is equivalent to an optimal solution or a combination of optimal solutions. The preliminary task set is not limited to one task set, and the purpose is to deduce the boundary of the automatic operation area as completely and accurately as possible. Each task set may deduce a corresponding boundary of the solution, and the accuracy of the boundary can be greatly enriched and verified by a plurality of task sets. The selection basis of the preliminary task set may be task execution situations, operation types and boundary simulation situation. The execution situation mainly refers to relevant matters during the task execution process, such as whether the task is executed, the execution time, and the precautions for execution; and the operation type mainly refers to the types of tasks that need to be executed. The simulation situation of the boundary may be understood as the solution effect, and the better simulation situation proves a better solution.

After the preliminary task set is set, a corresponding trajectory task needs to be set for each task. The purpose of the trajectory task is to record a work trajectory during the task execution process. The relevant parameters of the trajectory task may be stored in a database in advance, and may also be specifically set by an operator based on a specific scenario. The parameters of the trajectory task specifically relate to where to record a trajectory, when to start recording a trajectory, and when to end recording a trajectory, and may be specifically set based on a task attribute.

In a specific embodiment, if a device related to a task needs to move on the to-be-operated surface, a preset trajectory tracking apparatus is configured on the device to collect a work trajectory, and a trajectory of the device is taken as a work trajectory of the task. For example, the task is to clean the floor of a shopping mall with a handheld scrubber by a cleaner, and the trajectory task is to integrate a trajectory tracking apparatus on the scrubber to record a moving trajectory of the scrubber.

In a specific embodiment, if a device related to a task does not move on the to-be-operated surface and the device relies on a user to move on the to-be-operated surface, a preset trajectory tracking apparatus is configured on the user to collect a work trajectory, and a moving trajectory of the user is taken as a work trajectory of the task. For example, the task is to clean the walls of a shopping mall by a cleaner, and the trajectory task is to integrate a trajectory tracking apparatus on the cleaner to record the moving trajectory of the cleaner.

104. Executing the corresponding trajectory task while executing the preliminary task set, projecting a collected work trajectory onto the to-be-operated surface to obtain a work path, and fitting one or more complete and closed boundary lines based on the work path, wherein an area surrounded by the boundary lines is a simulated automatic operation area. The work trajectory may not be on the to-be-operated surface, and therefore, a projection is required to convert work trajectory to the to-be-operated surface. The execution of the step 104 requires integrating various work trajectories and processing the work trajectories. The obtained work paths are uniformly input into a computing terminal first, and the boundary lines are fitted based on the regions. The fitting rule may be preset, and may also be set based on a specific application scenario.

105. Enabling the first robot to perform path planning in the simulated automatic operation area, and automatically completing an operation of the first operation type in the automatic operation area. The first robot can automatically perform path planning. Since a range of the automatic operation area is determined, that is, a map is constructed, the path planning is automatically performed, and the operation is completed according to the planning, so that the deployment may be completed. After the automatic operation is completed, tasks can be re-formulated for other areas that are not related, so as to complete the work on the entire to-be-operated surface.

This embodiment provides a robot multi-task operation planning method, which fully utilizes the coordination relationship among tasks in work areas to create relevant area information by utilizing the work trajectories of other tasks before the robot automatically operates, so as to complete the deployment of the robot. Compared with the prior art, the application requires neither professional and cumbersome deployment processes such as map construction, editing and path setting nor complicated operation processes such as task selection, position confirmation and task initiation, and can give full play to the advantages of non-automatic operations and automatic operations.

### Embodiment 2

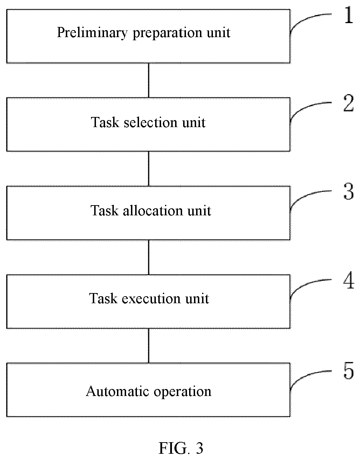

Embodiment 2 of the application discloses a robot multi-task operation planning system, which systematizes the robot multi-task operation planning method according to Embodiment 1 to enable the robot multi-task operation planning system to be more practical. An overall structure diagram of the robot multi-task operation planning system is shown in FIG. 3 in the specification. The specific solution is as follows:
A robot multi-task operation planning system suitable for scenarios with large work areas and inconvenience in map construction includes:
a preliminary preparation unit 1, configured to determine a preset first robot and a preset to-be-operated surface, and define an area that is in the to-be-operated surface and that requires the first robot to automatically complete a preset first operation type as an automatic operation area;
a task selection unit 2, configured to select a task needing to be executed on the to-be-operated surface and relating to a boundary of the automatic operation area, and combine all task sets capable of simulating the boundary of the automatic operation area according to moving ranges of tasks if executed;
a task allocation unit 3, configured to comprehensively analyse execution situations and operation types of tasks in the task sets and simulation status of the boundary of the automatic operation area, select one or more task sets as a preliminary task set, and configure a trajectory task about a work trajectory during execution of a collection task for each task in the preliminary task set;
a task execution unit 4, configured to execute the corresponding trajectory task while executing the preliminary task set, project a collected work trajectory onto the to-be-operated surface to obtain a work path, and fit one or more complete and closed boundary lines based on the work path, wherein an area surrounded by the boundary lines is a simulated automatic operation area; and
an automatic operation unit 5, configured to enable the first robot to perform path planning in the simulated automatic operation area, and automatically complete an operation of the first operation type in the automatic operation area.

In a specific embodiment, the robot multi-task operation planning system further includes:
a non-automatic operation unit, configured to define a task related to the first operation type as a first task; judge whether the first task exists in the preliminary task set; if the first task does not exist, arrange the operation of the first operation type for an area except the automatic operation area in the to-be-operated surface; and if the first task exists, construct a first operation area where an operation has been completed based on a work trajectory of the first task, and arrange the operation of the first operation type for an area except the automatic operation area and the first operation area in the to-be-operated surface.

In a specific embodiment, the robot multi-task operation planning system further includes:
an operation detection unit, configured to, after completing an automatic operation, detect an operation effect of the automatic operation area; and if an area with a poor operation effect exists, construct a task of the first operation type in the area.

This embodiment discloses a robot multi-task operation planning system, which systematizes the robot multi-task operation planning method according to Embodiment 1 to enable the robot multi-task operation planning system to be more practical.

### Embodiment 3

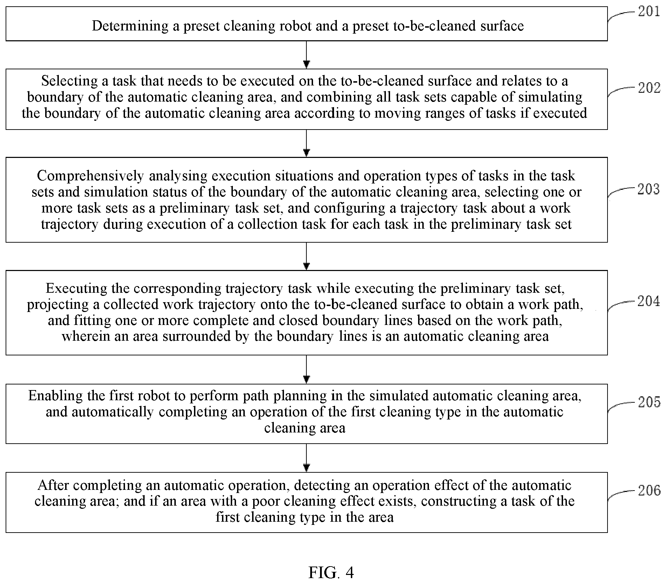

This embodiment discloses a cleaning method, which applies the robot multi-task operation planning method according to Embodiment 1 to the field of cleaning. A flowchart of the cleaning method is shown in FIG. 4. The specific solution is as follows:
A cleaning method adopting the robot multi-task operation planning method according to Embodiment 1 includes:
201. determining a preset cleaning robot and a preset to-be-cleaned surface, and defining an area that is in the to-be-cleaned surface and that requires the cleaning robot to automatically complete a preset first cleaning type as an automatic cleaning area;
202. selecting a task needing to be executed on the to-be-cleaned surface and relating to a boundary of the automatic cleaning area, and combining all task sets capable of simulating the boundary of the automatic cleaning area according to moving ranges of tasks if executed;
203. comprehensively analysing execution situations and operation types of tasks in the task sets and simulation status of the boundary of the automatic cleaning area, selecting one or more task sets as a preliminary task set, and configuring a trajectory task about a work trajectory during execution of a collection task for each task in the preliminary task set;
204. executing the corresponding trajectory task while executing the preliminary task set, projecting a collected work trajectory onto the to-be-cleaned surface to obtain a work path, and fitting one or more complete and closed boundary lines based on the work path, wherein an area surrounded by the boundary lines is an automatic cleaning area; and
205. enabling the cleaning robot to perform path planning in the simulated automatic cleaning area, and automatically completing an operation of the first cleaning type in the automatic cleaning area; and
206. after completing an automatic operation, detecting an operation effect of the automatic cleaning area; and if an area with a poor cleaning effect exists, constructing a task of the first cleaning type in the area.

A cleaning device related to the task includes a floor washer and/or a floor sweeper. For example, the cleaning devices include household handheld floor scrubbers, commercial handheld floor scrubbers (a water tank provided on a handle), commercial handheld floor scrubbers (a water tank provided on a chassis), single-brush floor scrubbers, commercial push-type sweepers, commercial push-type floor scrubbers, commercial ride-on floor scrubbers, commercial stand-on floor scrubbers, commercial ride-on washing and sweeping machines, and commercial ride-on sweepers.

The cleaning method is not limited to ground cleaning, but can also be used for water surface cleaning and even space cleaning. For example, the cleaning robot may be a garbage cleaning boat, and a to-be-cleaned surface may be a water area where garbage exists.

In a specific embodiment, the cleaning method further includes: defining a task related to the first cleaning type as a first task; judging whether the first task exists in the preliminary task set; if the first task does not exist, arranging the operation of the first cleaning type for an area except the automatic cleaning area in the to-be-cleaned surface; and if the first task exists, constructing a first operation area where an operation has been completed based on a work trajectory of the first task, and arranging the operation of the first cleaning type for an area except the automatic cleaning area and the first operation area in the to-be-operated surface.

### Embodiment 4

This embodiment discloses an aerial operation method, which applies the robot multi-task operation planning method according to Embodiment 1 to the field of aerial operation. A flowchart of the aerial operation method is shown in FIG. 4. The specific solution is as follows:
301. determining a preset flying robot and a preset to-be-operated surface, and defining an area that is in the to-be-operated surface and that requires the flying robot to automatically complete a preset first operation type as an automatic flying area;
302. selecting a task needing to be executed on the to-be-operated surface and relating to a boundary of the automatic flying area, and combining all task sets capable of simulating the boundary of the automatic flying area according to moving ranges of tasks if executed;
303. comprehensively analysing execution situations and operation types of tasks in the task sets and simulation status of the boundary of the automatic flying area, selecting one or more task sets as a preliminary task set, and configuring a trajectory task related to a flying trajectory during execution of a collection task for each task in the preliminary task set;
304. executing the corresponding trajectory task while executing the preliminary task set, projecting a collected flying trajectory onto the to-be-operated surface to obtain a flying path, and fitting one or more complete and closed boundary lines based on the flying path, wherein an area surrounded by the boundary lines is a simulated automatic flying area;
305. enabling the flying robot to perform path planning in the simulated automatic flying area, and automatically completing an operation of the first operation type in the automatic flying area; and
306. after completing an automatic operation, detecting an operation effect of the automatic flying area; and if an area with a poor operation effect exists, constructing a task of the first operation type in the area.

For example, the flying robot may be an unmanned aerial vehicle, and the first operation type may be spraying a pesticide. In the automatic flying area, the unmanned aerial vehicle may automatically spray the pesticide. Before the automatic flying area is determined, the unmanned aerial vehicle may be manually controlled by a user to spray some areas, and a safety boundary is set for the unmanned aerial vehicle.

The application provides a robot multi-task operation planning method and system, and an application of the robot multi-task operation planning method, which fully utilize the coordination relationship among tasks in work areas to create relevant area information by utilizing the work trajectories of other tasks before the robot automatically operates, so as to complete the deployment of the robot. Compared with the prior art, the application requires neither professional and cumbersome deployment processes such as map construction, editing and path setting nor complicated operation processes such as task selection, position confirmation and task initiation, and can give full play to the advantages of non-automatic operations and automatic operations.

Those skilled in the art can understand that the accompanying drawings are merely schematic diagrams of a preferred implementation scenario and that the modules or processes shown in the accompanying drawings are not necessary to implement the present disclosure. Those skilled in the art can understand that the apparatus in the devices in the implementation scenario may be distributed in the modules in the implementation scenario according to the description of the implementation scenario, and may also be positioned in one or more devices different from this implementation scenario with corresponding changes.

## Claims

1. A robot multi-task operation planning method, **characterized in that** the planning method comprises:
determining a preset first robot and a preset to-be-operated surface, and defining an area that is in the to-be-operated surface and that requires the first robot to automatically complete a preset first operation type as an automatic operation area;
selecting a task that needs to be executed on the to-be-operated surface and relates to a boundary of the automatic operation area, and combining all task sets capable of simulating the boundary of the automatic operation area according to moving ranges of tasks if executed;
comprehensively analysing execution situations and operation types of tasks in the task sets and simulation status of the boundary of the automatic operation area, selecting one or more task sets as a preliminary task set, and configuring a trajectory task about a work trajectory during execution of a collection task for each task in the preliminary task set;
executing the corresponding trajectory task while executing the preliminary task set, projecting a collected work trajectory onto the to-be-operated surface to obtain a work path, and fitting one or more complete and closed boundary lines based on the work path, wherein an area surrounded by the boundary lines is a simulated automatic operation area; and
enabling the first robot to perform path planning in the simulated automatic operation area, and automatically completing an operation of the first operation type in the automatic operation area.

2. The robot multi-task operation planning method according to claim 1, **characterized in that** the planning method comprises:
defining a task related to the first operation type as a first task;
judging whether the first task exists in the preliminary task set;
if the first task does not exist, arranging the operation of the first operation type for an area except the automatic operation area in the to-be-operated surface; and
if the first task exists, constructing a first operation area where an operation has been completed based on a work trajectory of the first task, and arranging the operation of the first operation type for an area except the automatic operation area and the first operation area in the to-be-operated surface.

3. The robot multi-task operation planning method according to claim 1, **characterized in that** the planning method comprises:
after completing an automatic operation, detecting an operation effect of the automatic operation area; and
if an area with a poor operation effect exists, constructing a task of the first operation type in the area.

4. The robot multi-task operation planning method according to claim 1, **characterized in that** the planning method comprises:
if a device related to a task needs to move on the to-be-operated surface,
configuring a preset trajectory tracking apparatus on the device to collect a work trajectory, and taking a trajectory of the device as a work trajectory of the task.

5. The robot multi-task operation planning method according to claim 1, **characterized in that** the planning method comprises:
if a device related to a task does not move on the to-be-operated surface and the device relies on a user to move on the to-be-operated surface,
configuring a preset trajectory tracking apparatus on the user to collect a work trajectory, and taking a moving trajectory of the user as a work trajectory of the task.

6. A robot multi-task operation planning system, **characterized in that** the system comprises:
a preliminary preparation unit, configured to determine a preset first robot and a preset to-be-operated surface, and define an area that is in the to-be-operated surface and that requires the first robot to automatically complete a preset first operation type as an automatic operation area;
a task selection unit, configured to select a task that needs to be executed on the to-be-operated surface and relates to a boundary of the automatic operation area, and combine all task sets capable of simulating the boundary of the automatic operation area according to moving ranges of tasks if executed;
a task allocation unit, configured to comprehensively analyse execution situations and operation types of tasks in the task sets and simulation status of the boundary of the automatic operation area, select one or more task sets as a preliminary task set, and configure a trajectory task about a work trajectory during execution of a collection task for each task in the preliminary task set;
a task execution unit, configured to execute the corresponding trajectory task while executing the preliminary task set, project a collected work trajectory onto the to-be-operated surface to obtain a work path, and fit one or more complete and closed boundary lines based on the work path, wherein an area surrounded by the boundary lines is a simulated automatic operation area; and
an automatic operation unit, configured to enable the first robot to perform path planning in the simulated automatic operation area, and automatically complete an operation of the first operation type in the automatic operation area.

7. The robot multi-task operation planning system according to claim 6, **characterized in that** the system further comprises:
a non-automatic operation unit, configured to define a task related to the first operation type as a first task; judge whether the first task exists in the preliminary task set;
if the first task does not exist, arrange the operation of the first operation type for an area except the automatic operation area in the to-be-operated surface; and
if the first task exists, construct a first operation area where an operation has been completed based on a work trajectory of the first task, and arrange the operation of the first operation type for an area except the automatic operation area and the first operation area in the to-be-operated surface.

8. The robot multi-task operation planning system according to claim 7, **characterized in that** the system further comprises:
an operation detection unit, configured to, after completing an automatic operation, detect an operation effect of the automatic operation area; and if an area with a poor operation effect exists, construct a task of the first operation type in the area.

9. A cleaning method, adopting the robot multi-task operation planning method according to any one of claims 1 to 5, **characterized in that** the cleaning method comprises:
determining a preset cleaning robot and a preset to-be-cleaned surface, and defining an area that is in the to-be-cleaned surface and that requires the cleaning robot to automatically complete a preset first cleaning type as an automatic cleaning area;
selecting a task that needs to be executed on the to-be-cleaned surface and relates to a boundary of the automatic cleaning area, and combining all task sets capable of simulating the boundary of the automatic cleaning area according to moving ranges of tasks if executed;
comprehensively analysing execution situations and operation types of tasks in the task sets and simulation status of the boundary of the automatic cleaning area, selecting one or more task sets as a preliminary task set, and configuring a trajectory task about a work trajectory during execution of a collection task for each task in the preliminary task set;
executing the corresponding trajectory task while executing the preliminary task set, projecting a collected work trajectory onto the to-be-cleaned surface to obtain a work path, and fitting one or more complete and closed boundary lines based on the work path, wherein an area surrounded by the boundary lines is a simulated automatic cleaning area; and
enabling the cleaning robot to perform path planning in the simulated automatic cleaning area, and automatically completing an operation of the first cleaning type in the automatic cleaning area.

10. An aerial operation method, adopting the robot multi-task operation planning method according to any one of claims 1 to 5, **characterized in that** the aerial operation method comprises:
determining a preset flying robot and a preset to-be-operated surface, and defining an area that is in the to-be-operated surface and that requires the flying robot to automatically complete a preset first operation type as an automatic flying area;
selecting a task that needs to be executed on the to-be-operated surface and relates to a boundary of the automatic flying area, and combining all task sets capable of simulating the boundary of the automatic flying area according to moving ranges of tasks if executed;
comprehensively analysing execution situations and operation types of tasks in the task sets and simulation status of the boundary of the automatic flying area, selecting one or more task sets as a preliminary task set, and configuring a trajectory task related to a flying trajectory during execution of a collection task for each task in the preliminary task set;
executing the corresponding trajectory task while executing the preliminary task set, projecting a collected flying trajectory onto the to-be-operated surface to obtain a flying path, and fitting one or more complete and closed boundary lines based on the flying path, wherein an area surrounded by the boundary lines is a simulated automatic flying area; and
enabling the flying robot to perform path planning in the simulated automatic flying area, and automatically completing an operation of the first operation type in the automatic flying area.
